# EUROPEAN PATENT APPLICATION

(11) **EP 1 835 394 A2**
(43) Date of publication of application: **19.09.2007**
(21) Application number: 07104042.2
(22) Date of filing: 13.03.2007
(51) Int. Cl.: G06F 3/12

(54) **Print management system, data management device and data management method**

(30) Priority: 17.03.2006 JP 2006075549
(71) Applicant: Canon Kabushiki Kaisha, Ohta-Ku, Tokyo 146-8501 (JP)
(72) Inventor: Mizuno, Takafumi, Ohta-ku Tokyo (JP)
(74) Representative: Sharp, Alan Cooper

(57) **Abstract**

A print management system, which is used for managing printing of document data using a printing means adapted to form a print image on a printing medium, characterized by comprising: a schedule storage means (995) for, on a per-event basis, storing schedule information containing the time and date of an event and identification information for the attendees of the event, a print status storage means (995) for, on a per-event and per-attendee basis, storing print status information describing the print status of the document data, an input means (996) for inputting user identification information, and a control means (990) for, based on the schedule information and the print status information, identifying document data to be printed depending on the user and controlling display of a screen prompting to print the identified document data.

## Description

### BACKGROUND OF THE INVENTION

### Field of the Invention

The present invention relates to a print management system, a data management device and a data management method, and associated computer program and storage medium.

### Description of the Related Art

With the increasing use of computers and presentation software in recent years, it has become a frequent occurrence for presentation data, document data, and other electronic documentation to be produced and used during meetings, etc. Such electronic documentation is often distributed among the participants by the presenters or hosts of a meeting in order to inform them of its content in advance. Moreover, even in the case of electronically produced documentation, the documentation is often printed on printing media such as paper in view of the ease of writing and being able to read when meeting participants don't have access to notebook PCs etc.

With the expansion of equipment functionality, it has become customary to equip copy machines used for printing such documentation on printing media with storage devices, such as hard disks, in order to temporarily hold the print data etc. of scanned images and applications. Furthermore, there is equipment functionality capable of interchange of data held in storage devices between copy machines connected through a network, and capable of permitting cooperation with user management and other servers.

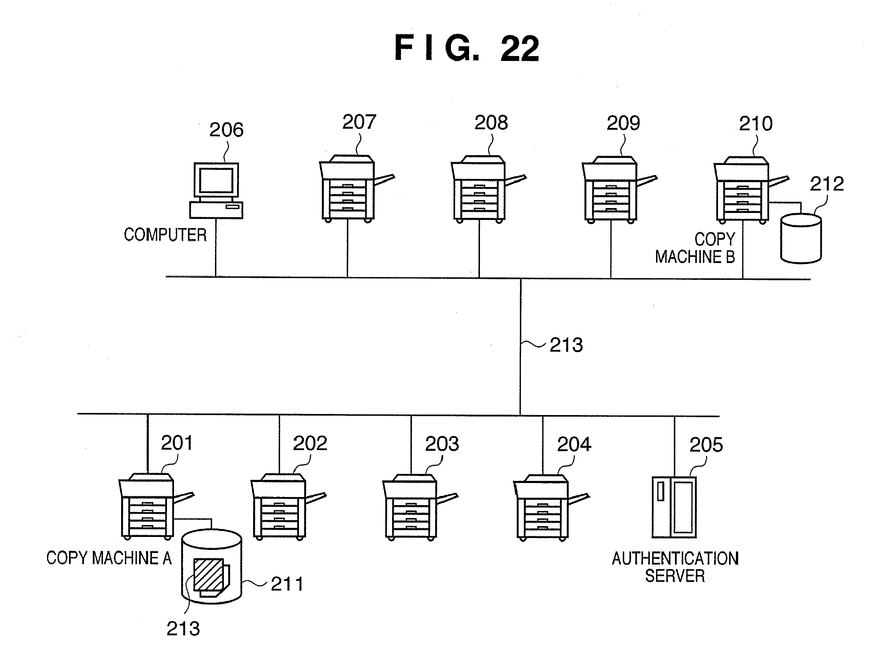

Fig. 22 illustrates an example of a system with a plurality of copy machines connected on a network 213. Here, for example, a document (original) is scanned in by a copy machine A201 and printed by the copy machine A (201). The acquired image data is stored on a hard disk 211 of the copy machine A. Subsequently, certain operations are performed on a copy machine B (210) connected on the network 213 in order to acquire the image data saved on the hard disk 211 of the copy machine A. The acquired image data is then printed by the copy machine B.

As an alternative, the image data read to the hard disk 211 of the copy machine A may be transferred to a hard disk 212 of the copy machine B in advance, at the time when the document is scanned by the copy machine A. In this case, the copy machine B2 carries out printing using data from the hard disk 212.

Moreover, printing can be carried out by transmitting an application-created document from a computer 206, to the copy machine A on the network in a printable format using a printer driver etc. Alternatively, it can be saved in the same manner as a document scanned to the hard disk 211 of the copy machine A. In this case, this data can be printed from the copy machine B as described above.

Furthermore, in some cases appropriate authentication processing may be carried out in the copy machines 201, 210 and computer 206 to permit identification of image data recorded on the hard disks 211 and 212. For instance, a server equipped with a mechanism allowing for authentication of users, groups, etc. can be employed as an authentication server 205. User authentication can be carried out by transmitting user authentication information inputted into a copy machine connected on the network to this authentication server 205. For instance, let us assume that information describing a user, X, is registered on the authentication server 205. In this case, access to data and printing, etc. on the network permitted on a per-user basis etc. can be realized when information describing user X is inputted into the copy machine A 201 or to the copy machine B 210 and authenticated by the authentication server 205.

Thus, systems are known that are capable of distributing or printing documentation during a meeting. It is also known to use applications to generate image data of meeting documentation from electronic data produced by presenters in advance in order to distribute it to the other participants. As a result, documentation used during a meeting can be shared by the participants (see for example Japanese Patent Laid-Open No. 2005-284346).

However, documentation that meeting participants need might not be printed even though it may have been sent in advance. Moreover, sometimes there may be no portable computers available that could be used to read the documentation sent in advance and, as a result, the participants of the meeting may be unable to read it. Alternatively, even if the documentation sent in advance is printed, when there is a lot of meeting documentation, a portion of the documentation might be printed at first for content confirmation purposes. At such time, the same already printed documentation gets re-printed before the meeting, thereby wasting paper.

In the arrangements disclosed in Japanese Patent Laid-Open No. 2005-284346, the sharing of meeting documentation was implemented, but no print management of documentation was performed.

In addition, because these arrangements operated independently of meeting schedules, users had to manage schedules by themselves and perform print management of documentation in accordance with the times and dates of the meetings. Therefore, in the conventional arrangements, users had to assume considerable responsibility for printing meeting documentation.

### SUMMARY OF THE INVENTION

The present invention was designed with the above-mentioned problems in mind, and it is an object of the invention to provide a technology allowing for appropriate print management in accordance with meeting schedules to reduce waste.

According to a first aspect of the present invention, there is provided a print management system as specified in claims 1 to 9. According to a second aspect of the present invention, there is provided a data management method as specified in claim 12.

Further features of the present invention will become apparent from the following description of exemplary embodiments with reference to the attached drawings.

### BRIEF DESCRIPTION OF THE DRAWINGS

Fig. 1 is a topology diagram illustrating an exemplary system configuration.

Fig. 2 is a block diagram illustrating an exemplary copy machine configuration.

Fig. 3 is a block diagram schematically illustrating the hardware configuration of an information processor.

Fig. 4 is a schematic view illustrating the structure of information managed on the schedule server.

Fig. 5 is a schematic view illustrating an exemplary meeting summary table.

Fig. 6 is a schematic view illustrating an exemplary individual meeting table.

Fig. 7 is a schematic view illustrating an exemplary presenter table.

Fig. 8 is a schematic view illustrating an exemplary participant table.

Fig. 9 is a view illustrating an exemplary meeting matrix.

Fig. 10A, 10B are schematic views illustrating an exemplary meeting matrix production process.

Fig. 11 is a figure schematically illustrating a display of information concerning a specific meeting selected by a user from a meeting list.

Fig. 12 is a diagram illustrating an exemplary meeting matrix.

Figs. 13A, 13B, 13C, and 13D are schematic views illustrating the way printing is performed if a portion of the meeting documentation has been printed out.

Figs. 14A, 14B are diagrams illustrating exemplary displays of messages prompting users to register presentation documentation.

Figs. 15A, 15B are diagrams illustrating exemplary displays of messages prompting users to print presentation documentation.

Fig. 16 is a flow chart illustrating the flow of basic processing.

Fig. 17 is a flow chart illustrating the flow of presenter confirmation processing.

Fig. 18 is a flow chart illustrating the flow of participant confirmation processing.

Figs. 19A and 19B are diagrams illustrating a meeting matrix, in which a plurality of pieces of documentation can be registered by presenters.

Fig. 20 is a diagram illustrating an exemplary display used for the confirmation of re-printing.

Fig. 21 is a diagram illustrating an expanded individual meeting table.

Fig. 22 is a diagram illustrating an example of a system with a plurality of copy machines connected on a network.

### DESCRIPTION OF THE EMBODIMENTS

Embodiments of the present invention are explained in detail below by referring to the attached drawings. However, the constituent elements described in the embodiments are illustrative and should not be construed as limiting the scope of the invention to only those elements.

### <Embodiment 1>

### (System Configuration)

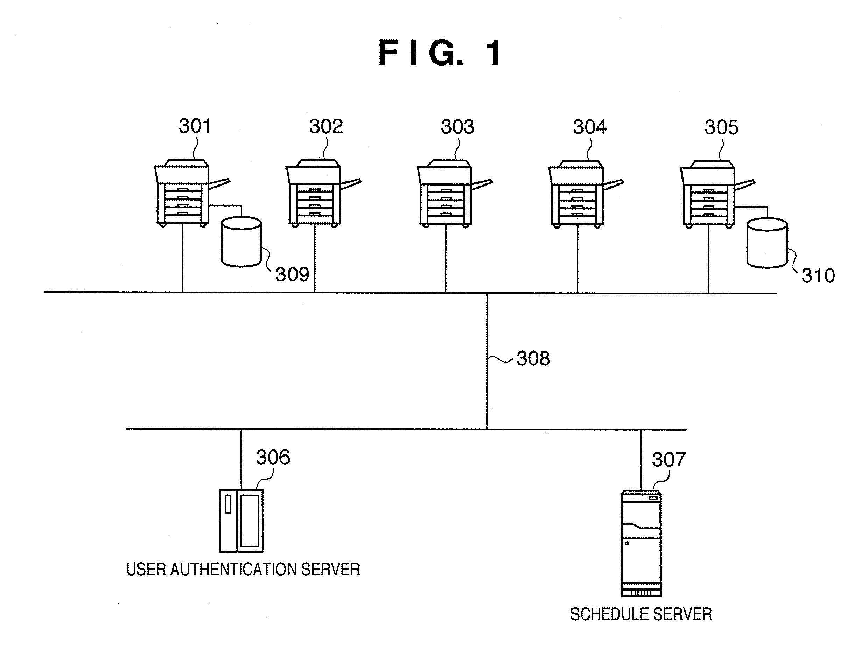

Fig. 1 is a topology diagram illustrating an exemplary system configuration used in the present embodiment. In the system of the present embodiment, five copy machines 301-305 are connected on a network 308. In addition, storage devices, such as hard disks, etc., are connected to the copy machines 301-305. However, in Fig. 1, only copy machines 301 and 305 are shown equipped with storage devices 309 and 310. Furthermore, a user authentication server (user management server) 306 and a schedule management server (schedule server) 307 are connected to the network 308.

The copy machines 301-305 are copying devices comprising a scanning device that reads originals to acquire image data and a printing device forming images on printing media based on data to be printed. As explained below, the copy machines 301-305 accept instructions directly from users such as the attendees etc. (presenters and participants) of a meeting, which is an example of an event, and carry out print management of meeting documentation, which is an example of document data, in cooperation with the user authentication server 306 and schedule server 307.

The user authentication server 306 is an information processor which manages identification information for users such as presenters, participants, etc. The schedule management server 307 is an information processor which manages information concerning meeting schedules. The user authentication server 306 and schedule management server 307 are implemented, for instance, on personal computers (PCs), workstations (WSs), etc..

Although the network 308 is typically the Internet, it may assume any configuration, be it wired or wireless, so long as it is a public network (analog lines, ISDN, etc.), LAN, WAN, wireless LAN, or the like capable of data transmission and reception. The network communication protocol can be, for example, TCP/IP and the like.

It should be noted that the system configuration depicted in Fig. 1 is an illustration used to explain the configuration of the present embodiment and specific embodiments are not limited thereto. For instance, the user authentication server 306 and schedule server 307 may be implemented using the same information processor or using two, three or more processors. Alternatively, it may be configured such that some or all of the functions of the user authentication server 306 and schedule server 307 are implemented using either one, or a plurality of, copy machines 301-305.

### (Copy Machine Configuration)

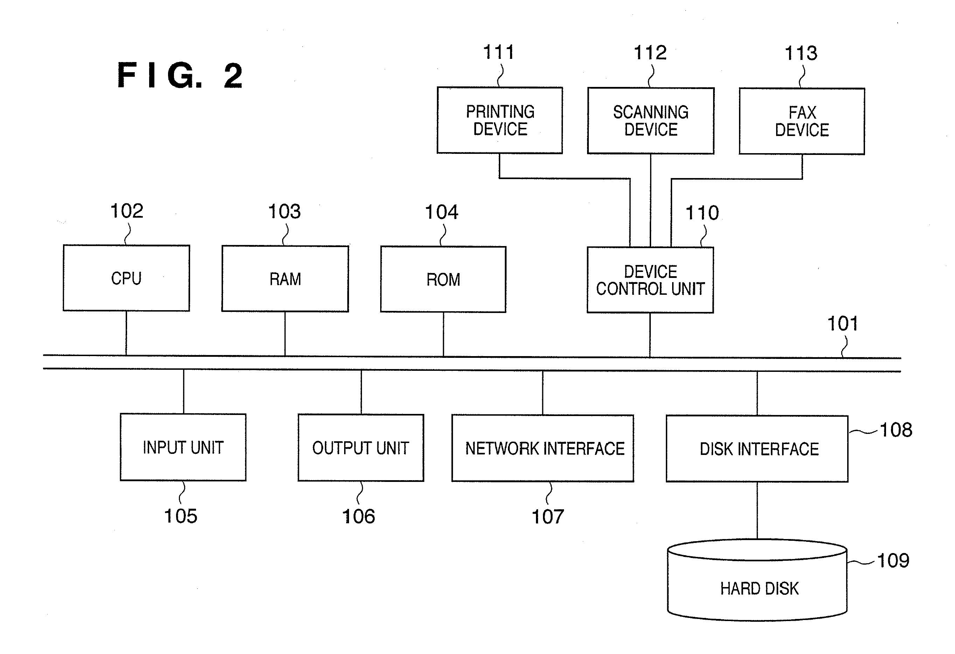

Fig. 2 is a block diagram illustrating an example of the configuration of the copy machines 301-305 used in the present embodiment. Because the copy machines 301-305 are identical, copy machine 301 is explained below as a representative example.

Various devices explained below are connected to a bus 101. A CPU 102 is a central processing unit, which carries out various control and arithmetic operations in connection with the performance of the functions of the copy machines 301-305, such as print processing during printing or image processing during scanning. A RAM 103 is a volatile memory, which operates as a work area for storing calculation results of the CPU 102 and image data, font data, etc. used for printing and scanning. A ROM 104 is a nonvolatile memory, for storing program and font data, etc. used to operate the CPU 102. The ROM 104 may be rewritable. Moreover, a program operating the CPU 102 may be resident within the RAM 103.

The CPU 102 issues instructions to an input unit 105, an output unit 106, a network interface 107, a disk interface 108, and a device control unit 110, and stores processing results, input results, and other information required on a temporary basis in the RAM 103.

The input unit 105 is a component receiving instruction information relating to scanning etc. from the user. The input unit 105 receives input information e.g. from a touch screen (not shown in the figure) installed in the copy machine 301. The output unit 106 displays the condition and functions of the copy machine 301, information necessary to receive instructions from the user, e.g. on a touch screen (not shown in the figure). It should be noted that devices used to implement the input unit 105 are not limited to touch screens and may be any devices so long as they are capable of accepting instructions from a user, such as buttons, jog dials, switches, keyboards, mouse devices, etc. Moreover, devices used to implement the output unit 106 are not limited to touch screens and any devices can be used so long as they are capable of displaying information to the user, e.g. liquid crystal panel displays, organic electroluminescence displays, SEDs, and the like. Depending on their configuration, the input unit 105 and output unit 106 operate as user interfaces.

The network interface 107 is a device for establishing connections to LANs and other external networks. The copy machine 301 performs interchange of data, such as images etc., with other copy machines, devices, and computers via the network interface 107. Alternatively, it exchanges information with the user authentication server 306, schedule server 307, etc. The disk interface 108 is an interface for the hard disk 109. Data intended for safeguarding image data, programs, etc. is stored on the hard disk 109. If necessary, data stored on the hard disk 109 is read to the RAM 103 and used on instructions from the CPU 102. Moreover, there may be a plurality of hard disks 109.

Devices that take care of printing, scanning, faxing, and various other functions installed in the copy machine 301 are connected to the device control unit 110. In the example of Fig. 2, a printing device 111, a scanning device 112, and a fax device 113 are connected to the device control unit 110. The printing device 111 is a device forming images on printing paper and other printing media based on the data to be printed. For instance, a laser beam printer (LBP) or an ink jet printer, etc. can be used as the printing device 111. The scanning device 112 is a device which optically reads an original and acquires image data. The fax device 112 is a device controlling the sending and receiving of images based on FAX communications.
It should be noted that there may be a separate device control unit 110 for each one of the connected devices and their functions.

It should be noted that as long as it comprises the input unit 105, display unit 106, and network interface 107, and is capable of communication via networks, computers, servers (306, 307, etc.), and other copy machines 302-305, the configuration of the copy machine 301 need not be as described. In other words, the copy machines 301-305 need not be provided with a copy function utilizing a scanning device and a printing device and may, for instance, be represented by devices provided only with a printing function or a reading function. Furthermore, this may be a personal computer (PC) provided neither with a printing function nor with a reading function and, in such a case, the printing function and reading function may be substituted by functions provided in other devices.

It should be noted that software implementing functionality equivalent to each of the devices above may be adapted for use as a substitute for the hardware devices.

The present embodiment illustrates a situation, in which the program of the present embodiment is loaded from the hard disk 109, which already has the program installed thereon, into the RAM 103 whenever the program is run. However, the program of the present embodiment may be configured to be recorded in the ROM 104, made part of the memory map, and executed directly by the CPU 102.

Moreover, although the present embodiment describes an arrangement implementing the copy machine of the present embodiment as a single device for the convenience of explanation, it can also be implemented as an arrangement, in which resources are distributed between a plurality of devices. For instance, it may be configured in a form, wherein resources used for storage and calculations are distributed between a plurality of devices. Another possibility is to distribute the resources to each component virtually implemented in the copy machine and perform parallel processing.

### (Configuration of Information Processor)

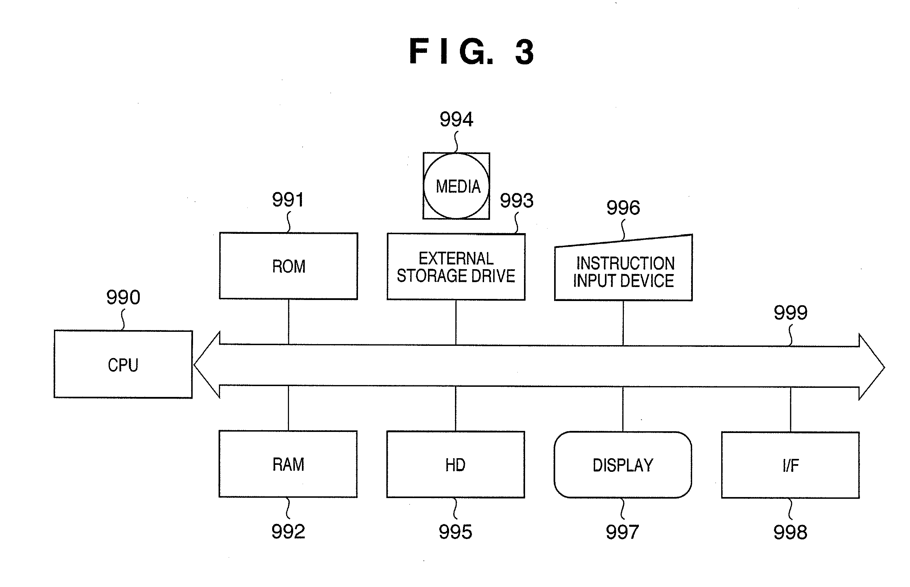

Fig. 3 is a block diagram schematically illustrating the information processor of the present embodiment, i.e. the hardware configuration of the user authentication server 306 and schedule management server 307.

In Fig. 3, reference numeral 990 designates a CPU. The CPU 990 exercises control to execute application programs, operating system (OS) and control programs, etc. stored on a HD 995, as described below, and to temporarily store information, files, etc. necessary for the execution of the programs in a RAM 992.

Reference numeral 991 is a ROM, which stores programs, such as a basic I/O program, etc., as well as font data, template data, and various other data used during basic processing. Reference numeral 992 is a RAM, which is used for temporary storage of various data and functions as a memory or work area, etc. for the CPU 990.

Reference numeral 993 is an external storage drive used to provide access to storage media and can load programs etc. stored on media (storage media) 994 into this computer system. In addition, the media 994 comprise flexible disks (FDs), CD-ROMs, CD-Rs, CD-RWs, PC cards, DVDs, IC memory cards, MOs, flash memory drives, etc..

Reference numeral 995, which is an external storage device, is a hard disk (HD) device that operates as a mass memory in the present embodiment. Application programs, the OS, control programs, and associated programs, etc. are stored on the HD 995.

Reference numeral 996 is an instruction input device, which corresponds to a keyboard, a pointing device (mouse etc.), a touch panel, etc. The user directs the information processor of the present embodiment by inputting commands etc. controlling the processor using the instruction input device 996.

Reference numeral 997 is a display, which displays commands input via the instruction input device 996, as well as output from the information processor in response thereto, etc.

Reference numeral 999 is a system bus, which is responsible for the flow of data in the information processor. Reference numeral 998 is an interface (hereinafter called an I/F), with data interchange with external devices carried out via this I/F 998.

It should be noted that software implementing functionality equivalent to each of the devices above may be adapted for use as a substitute for the hardware devices.

Although the present embodiment illustrates a case, in which the program of the present embodiment and associated data are loaded directly from the media 994 into the RAM992 and then executed, the embodiment is not limited thereto. For instance, it may be a situation, wherein the program of the present embodiment is loaded from the HD 995, which already has the program installed thereon, into the RAM 992 whenever the program is run. In addition, the program of the present embodiment may be configured to be recorded in the ROM 991, made part of the memory map, and executed directly by the CPU 990.

In addition, although the present embodiment describes an arrangement implementing the information processor as a single device for the convenience of explanation, it can also be implemented as an arrangement, in which resources are distributed between a plurality of devices. For instance, it may be configured in a form, wherein resources used for storage and calculations are distributed between a plurality of devices. Another possibility is to distribute the resources to each component virtually implemented in the information processor and perform parallel processing.

### (Storage of Data to be Printed)

The data to be printed can be roughly divided into print data received from external devices and image data read in by the scanning device 112. It should be noted that although processing used to store data to be printed can be carried out in the copy machines 301-305, the case, in which it is carried out by the copy machine 301, is explained as a representative example below.

First of all, the reading of image data by the copy machine 301 is explained with reference to Fig. 2. When the user's scanning-related instructions are input via the input unit 105, the program, which is run by the CPU 102 of the copy machine 301, receives the above-mentioned scanning instructions. Then, control is configured such that image data is read from the scanner unit 112 (scanning device) connected to the device control unit 110. The scanning device 112 is equipped with an ADF (Automatic Document Feeder), which makes it possible to handle a plurality of pages at a time. The acquired image data is stored on the hard disk 109 via the disk interface 108.

The process of saving print data from an application onto the hard disk is explained next with reference to Fig. 2. Let us consider a case, wherein an instruction concerning the saving of print data supplied through a printer driver from a external computer (not shown) connected to the network is given via the network interface 107 of the copy machine 301. At such time, the program, which is run by the CPU 102 of the copy machine 301, receives the instruction and, in response, returns an authorization to the external computer through the network interface 107. The external computer transmits print data via the network interface, and the acquired print data is stored on the hard disk 109 via the disk interface 108 of the copy machine 301.

Thus, the copy machine 301 can handle both print data and image data stored on the hard disk 109 as data to be printed.

### (User Authentication)

As described below, the copy machines 301-305 of the present embodiment perform appropriate print management based on each user's (meeting presenter or participant, etc.) print status, thereby facilitating management of the users' meeting documentation. For this reason, in operation, the copy machines 301-305 perform user authentication to identify users.

Here, explanations are provided regarding user authentication carried out by the copy machines. Although the copy machines 301-305 connected on the network 308 hold information on individual users in the copy machines and are capable of performing user authentication, it is also possible, as shown in Fig. 1, to perform user authentication using the user authentication server 306 on the network.

Here, explanations are provided to illustrate a case, in which the user authentication server 306 is used. For instance, when a user wants to use the copy machine 301, the copy machine 301 displays a screen prompting the user to input their username and password on an operating panel (touch screen). When the username and password are input by the user, the copy machine 301 transmits the user information (username and password) to the user authentication server 306 via the network 308. The protocol used for such a transmission can be, for example, Kerberos. Any protocol may be used so long as the protocol employed for user authentication is a method capable of authenticating users. The user authentication server 306 analyzes the received user information, compares it with the information already on the server 306, and returns information on the results of authentication and access authorization, etc. to the copy machine 301. It should be noted that each user is given an ID, which can uniquely identify the user.

As far as the user authentication server 306 is concerned, the server 306 need not be in direct possession of the information and may be managing resources on the network, such as a directory server. Moreover, the authentication server 306 used needs to be registered in the copy machine 301 in advance. Alternatively, it could be done in the form of selecting a specific server from among a plurality of authentication servers by specifying a domain name together with the user information.

If the user's access is authorized at this point, the user uses the copy function of the copy machine 301, scans the paper document in, and saves the data to the hard disk 109 in the copy machine. In this case, the hard disk 109 where the data is saved may be a hard disk 109 in the same piece of equipment as the copy machine 301 that the user used for scanning, or it may be a hard disk 109 in an external copy machine 301. Alternatively, it may be on an external hard disk connected to a computer on the network. It should be noted that user authentication is not limited to password authentication, and may be implemented e.g. based on authentication utilizing IC cards etc., as well as authentication utilizing biometric information, such as fingerprints, iris patterns, and the like.

### (Schedule Information)

In the present embodiment, the schedule server 307 manages schedule information relating to meetings, such as meeting agendas and participants, etc., and copy machines 301-305 carry out print management appropriately based on the schedule information. Now, the information managed by the schedule server 307 is explained next.

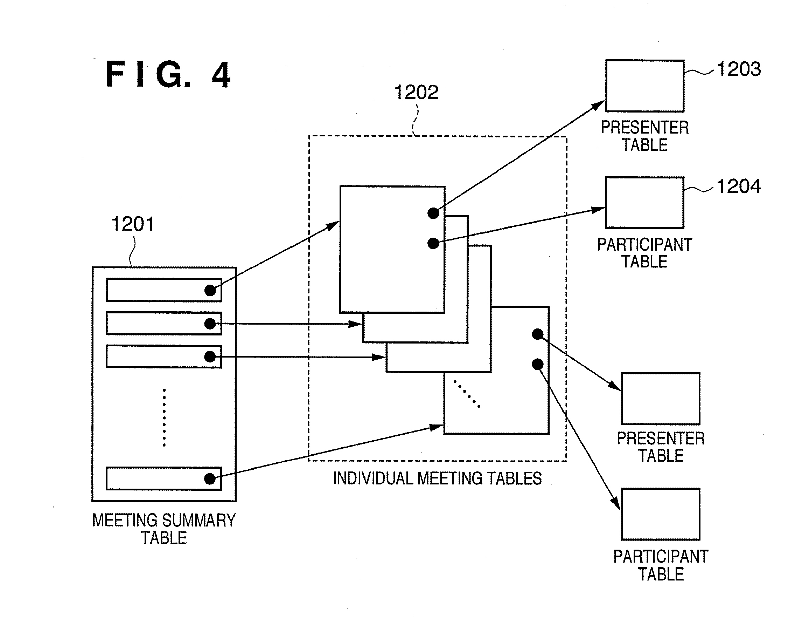

Fig. 4 is a schematic view illustrating the structure of information managed on the schedule server 307. In Fig. 4, 1201 is a meeting summary table, which presents a list of meetings. 1202 designates individual meeting tables providing detailed information (meeting date and time, presenters, participants, etc.) on individual meetings defined in the meeting summary table. 1203 are presenter tables (presenter information), which provide information on presenters, and 1204 are participant tables (participant information), which provide information on participants.

For an individual meeting defined in the table 1201, the meeting summary table 1201 has links connecting it to a corresponding individual meeting table 1202 in accordance with the meeting ID. In addition, the individual meeting table 1202 has links, i.e. associations based on identification information, to the presenter table 1203 and participant table 1204.

It should be noted that the registration of such information may be carried out via the schedule server 307 or may be performed remotely via the external devices of the copy machines 301-305 and computers on the network 308.

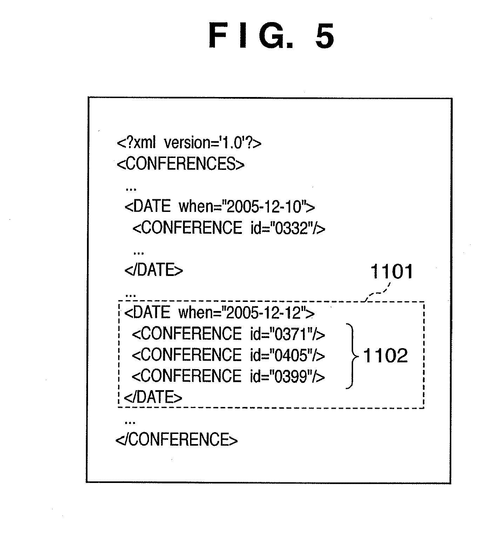

Fig. 5 is a schematic view illustrating an exemplary meeting summary table 1201. As described above, the meeting summary table 1201 shows a list of registered schedules (meetings) recorded on the schedule server 307. The dates of scheduled meetings managed by the schedule server 307 are entered in the meeting summary table 1201 by date. For instance, 1101 contains entries of information on meetings to be held on December 12, 2005. In addition, a unique meeting ID (identification information) used to identify meetings is assigned to each meeting managed by the schedule server 307. 1102 shows a list of meeting IDs of meetings held on December 12, 2005. In Fig. 5, there are three meetings held, namely, 0371, 0405, and 0399.

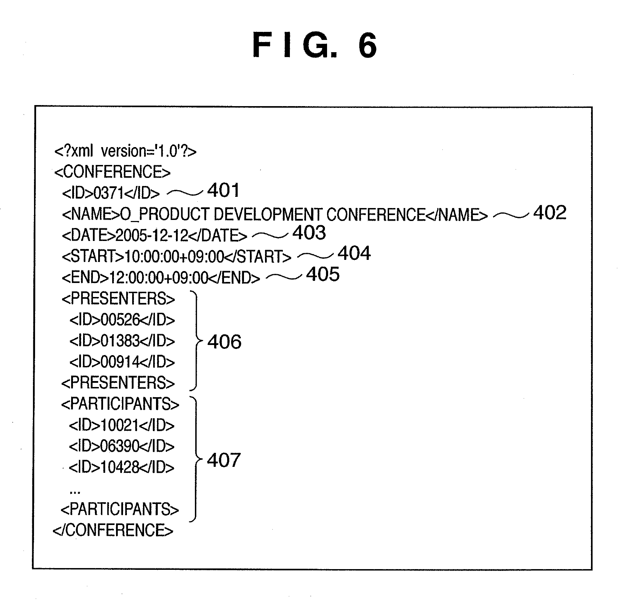

Fig. 6 is a schematic view illustrating an exemplary individual meeting table 1202. As described above, the individual meeting tables 1202 show information on individual meetings stored on the schedule server 307. It should be noted that while XML is used as the format of the meeting information in Fig. 6, it is not limited to this format and may be represented by other XML structures or use data formats other than XML.

401 is a unique ID (identification information) given to a meeting managed by the schedule server, which corresponds to the meeting ID described in 1102 of Fig. 5. 402 represents the name of the meeting, 403 represents the date, on which the meeting is convened, and 405, 406 respectively represent the start time and ending time of the meeting. It should be noted that the format of the meeting names, dates, start times and ending times is not limited to the one illustrated in Fig. 6. 406 shows a list of presenters, which in the example of Fig. 6 includes three presenters, their respective user IDs (identification information) being 00526, 01383, 00914. Here, the user IDs correspond to those stored on the user authentication server 306. While this is not shown in Fig. 6, it should be noted that if there is a plurality of user authentication servers, the list can be composed in such a manner that information describing user authentication servers is included in the respective presenter information of 406. In addition, reference numeral 407 is participant information, which in this example illustrates a case, wherein the user IDs of the participants are 10021, 06390, and 10428.

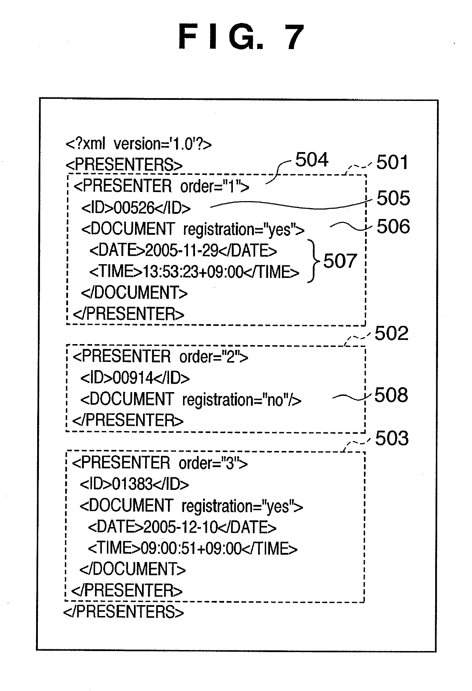

Fig. 7 is a schematic view illustrating an exemplary presenter table 1203. As described above, the presenter table 1203 shows detailed information on presenters, as recorded on the schedule server 307.

Items 501, 502, and 503 enclosed within broken lines in Fig. 7 show detailed information on presenters whose user IDs are, respectively, 00526, 00914, and 01383. The space within the dotted lines contains entries concerning the presentation sequence (504), the user IDs of the presenters (505), information on whether the text of a presentation has been registered in the system of the present embodiment (506), the time and date of registration in case it has (507), etc. Here, a presenter registers meeting documentation in advance in a storage area in the system of the present embodiment. In this case, information on whether the presenter's documents have been registered or not (506) is associated with a registration location using, for instance, link information describing the location of registration (not shown in Fig. 7), etc. The link information may point to a location in the schedule server 307 or may point to a location on the hard disk etc. of a copy machine on the network. In other words, the storage location of the meeting documentation data can be, for instance, the hard disk 109 of any one of the copy machines 301-305, the schedule server 307, etc. Albeit not illustrated in the example of Fig. 7, the link information can be presented e.g. as a URL (Uniform Resource Locator), etc.

It should be noted that the same applies to 502 and 503. However, because the registration attribute of the presenter shown in 502 is "no" and no documentation is registered (508), there is no description concerning the time and date of documentation registration. The presenter table 1203 of Fig. 7 is an example, and it may also contain entries of information such as, for instance, presentation titles for each individual presentation.

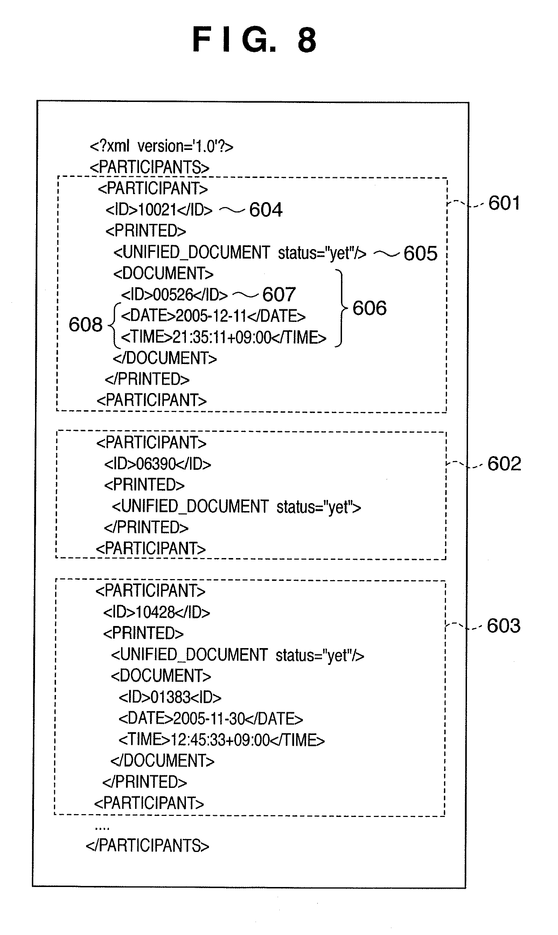

Fig. 8 is a schematic view illustrating an exemplary participant table 1204. As described above, the participant table 1204 shows detailed information on participants, as recorded on the schedule server 307.

Items 601, 602, and 603 enclosed within broken lines in Fig. 8 contain information on participants whose user IDs are, respectively, 10021, 06390, and 10428. In Fig. 8, information on other participants is omitted. Reference numeral 601 shows information on user ID 10021 (604). Reference numeral 605 shows whether this participant has printed the documents of all the presenters together as a single document. While this is not shown in Fig. 8, when the documents of all the presenters are printed together as a single document, the dates and times of printing of the child elements of 605 are recorded. Reference numeral 606 is information showing whether meeting documentation has been printed for individual presenters. Namely, it shows which presenter's (607) meeting documentation was printed, and when (608). Fig. 8 shows that a user (participant) whose user ID is 10021 printed the meeting documentation of a presenter with a user ID 00526 at 21:35:11, Japan standard time, on December 11, 2005. It should be noted that if the documentation of individual presenters has not been printed out, no document elements and no printing-related information is entered, as shown in 602.

The data format used for the participant information and presenter information depicted in Fig. 7 and Fig. 8 is just an example, in which XML is used for representation, and any format that permits entry of such information may be. It should be noted that the user authentication server 306 and schedule management server 307 may be one and the same server. Moreover, copy machines may have user authentication (management) and schedule management as one of their functions.

### (Meeting Matrix)

The system of the present embodiment produces a meeting matrix used to manage the presenters' meeting documentation registration status and the participants' documentation print status based on the presenter table 1203 illustrated in Fig. 7 and the participant table 1204 illustrated in Fig. 8. Then, print management of meeting documentation is carried out based on the meeting matrix. Here, explanations are provided regarding the meeting matrix (meeting matrix describing material registration and printing by presenters and participants). It should be noted that while the production and management of the meeting matrix is performed by the schedule management server 307, it can be carried out by other devices as well, such as by the copy machines 301-305, etc.

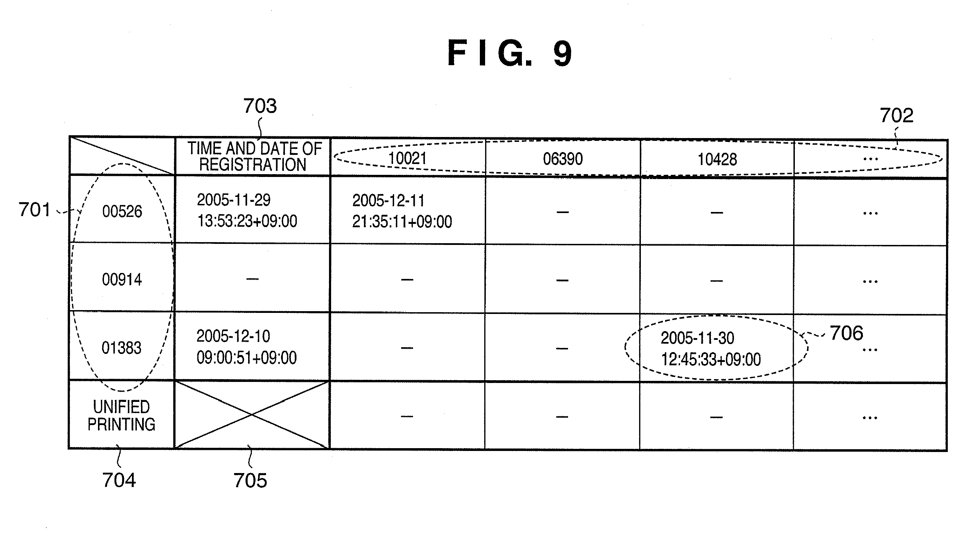

Fig. 9 is a view illustrating an exemplary meeting matrix. Reference numeral 701 shows the user IDs of the presenters and reference numeral 702 shows the user IDs of the participants. Namely, as shown in reference numeral 701, the presenters are allocated rows, and, as shown in reference numeral 702, the participants are allocated columns. Here, as shown by reference numeral 703, in the column next to the presenters, a column is provided for entering the time when documents are saved. Furthermore, the time when the documents of all the presenters are printed together (as a single document) by individual participants is entered in the lowermost row shown by reference numeral 704. Consequently, as shown by reference numeral 705, the intersection of reference numeral 703 and reference numeral 704, which has no meaning, is marked with an "×". The intersections of the presenters with the participants show the time and date when the participants printed the corresponding presenters' documentation. For instance, reference numeral 706 shows the time and date when Participant 10428 printed the documentation of Presenter 01383.

During the production of the meeting matrix of Fig. 9, first of all, information on all the presenters is acquired from the presenter table 1203 (Fig. 7) and the time and date of registration of documentation and IDs for each presenter are entered in the corresponding rows in column 703. Next, based on the participant table 1204 (Fig. 8), information on whether the participants' documentation has been printed, namely, the time and date of printing in case it has been printed, is stored for all the participants in the cells at the intersections of the rows corresponding to the presenters' documentation and the columns corresponding to the user IDs of the participants.

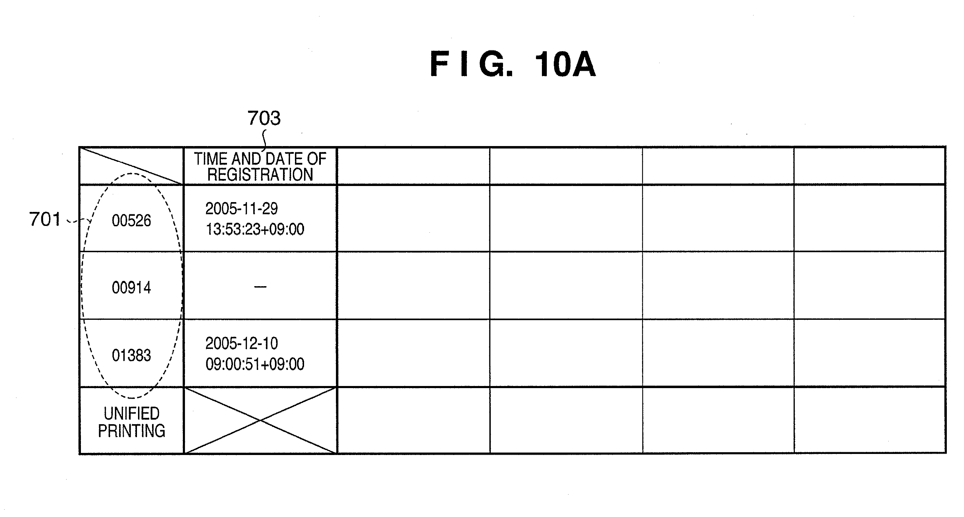

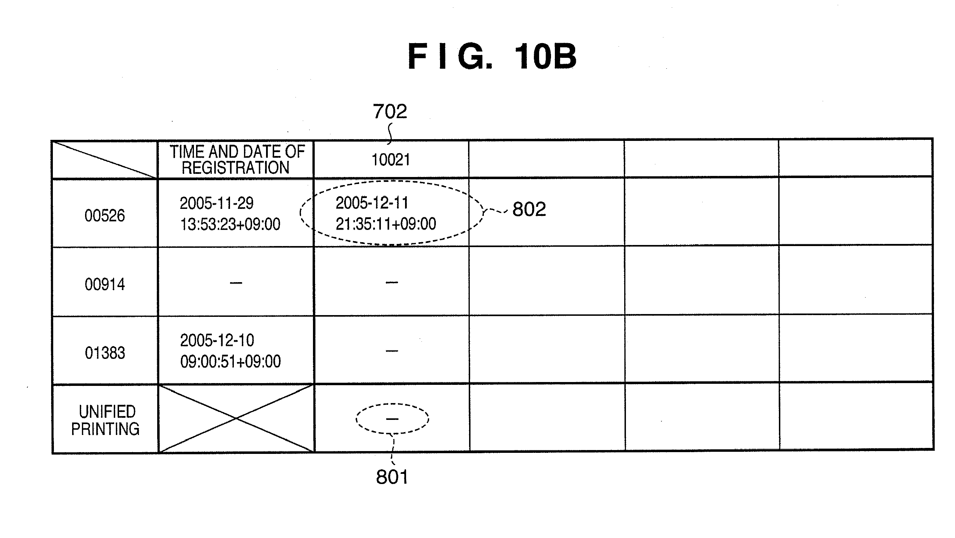

Figs. 10A, B are schematic views illustrating an exemplary meeting matrix production process. Specifically, as shown in Fig. 10A, first of all, a presenter's ID and registration information of Fig. 7 is entered in columns 701 and 703 of the meeting matrix. After that, as shown in Fig. 10B, participant information is entered in row 702. For instance, referring now to Fig. 10B, since Participant ID 10021 of Fig. 8 has not printed out the documentation of all the presenters together as a single document, the fact that the documentation has not been printed out is indicated with "-" in the lowermost row (801). In addition, since the documentation of the presenter whose user ID is 00526 has been printed out, the time and date of printing is entered at the intersection of IDs 10021 and 00526 (802). Since there are no entries regarding documentation of other presenters, "-" is entered elsewhere. If the same processing is continued for all the participants, a meeting matrix is produced, such as the one shown in Fig. 9. The schedule server 307 produces the meeting matrix whenever information on the presenters and information on the participants is updated. To pick the timing of the updates, one can use well-known event-driven and other techniques.

Suggested events, during which the meeting matrix is updated, include, for example, cases in which meeting presenters "register documentation", "delete registered documentation", or "update registered documentation". Alternatively, they may include cases, in which the participants of a meeting "print registered documentation" or "print all of the documentation as a single document". However, they are not limited to the above cases.

### (Summary of Meeting Participant-Related Processing)

An outline of meeting participant-related processing carried out in the arrangement of the present embodiment is provided next. A copy machine (for example 301) accepts a login from a meeting participant and accesses the schedule server 307 based on instructions input by the participant. Meeting list information is then displayed on the operating panel 106 of the copy machine and user's (participant's) selections are received therefrom.

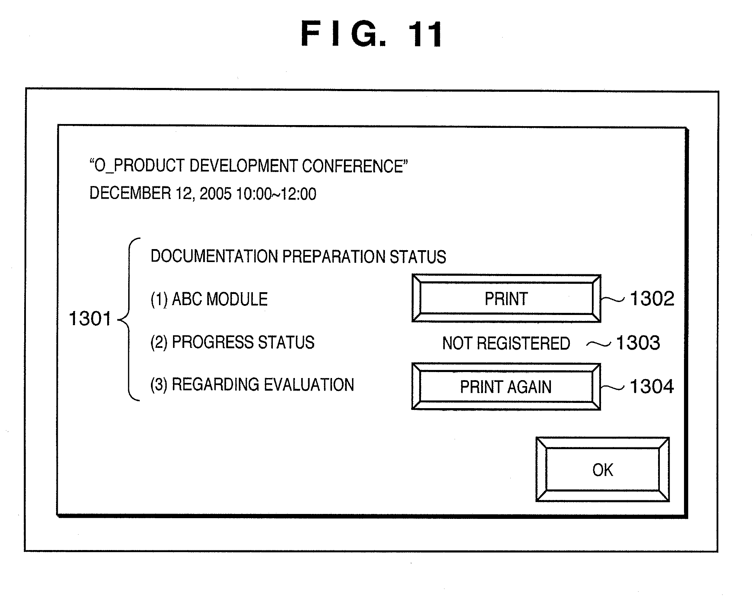

Fig. 11 is a figure schematically illustrating an exemplary display of information concerning a specific meeting selected by the user from the meeting list. It should be noted that the display can be viewed, for instance, on the operating panel provided in the copy machine 301. As shown in Fig. 11, the copy machine 301 displays information on the name of the meeting, the date and time when it is held, etc. Furthermore, 1301 shows the preparation status of the documentation. If documentation has been registered by presenters, control is configured to display a "Print" button, as shown by 1302, thereby allowing individual pieces of documentation to be printed by selecting the Print button 1302. In addition, for documentation that has not been registered yet, "Not Registered" is displayed, as shown by 1303, making it impossible to enter printing instructions. Furthermore, if it has been printed once, a "Print Again" button is displayed, as shown by 1304, which indicates that the documentation has already been printed once.

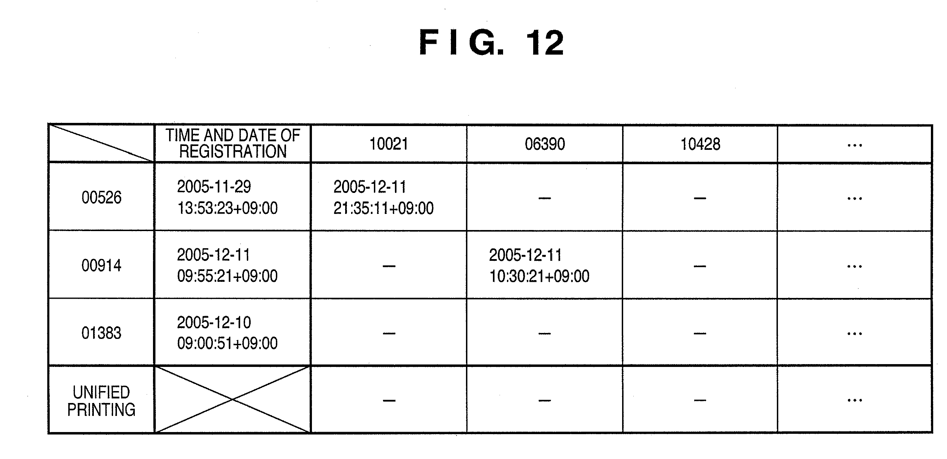

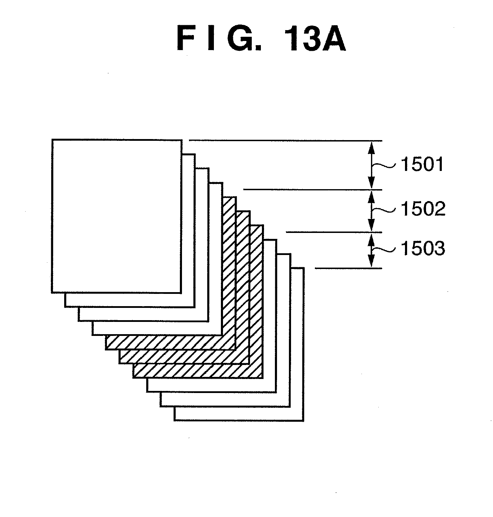

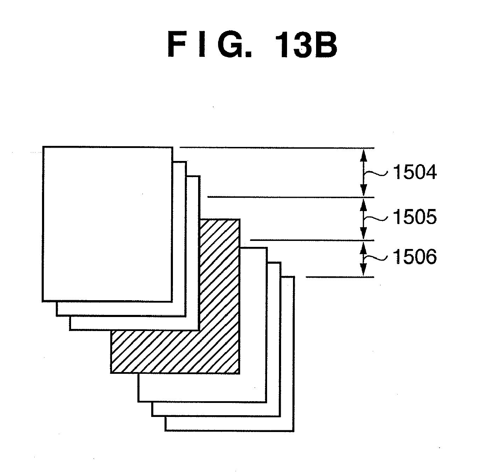

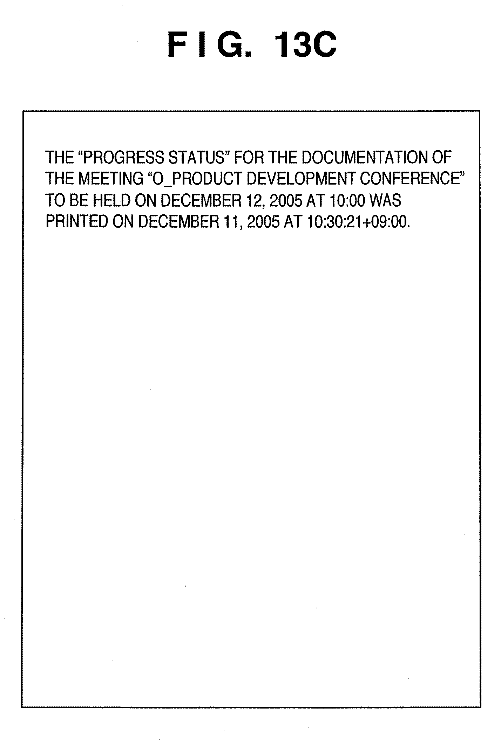

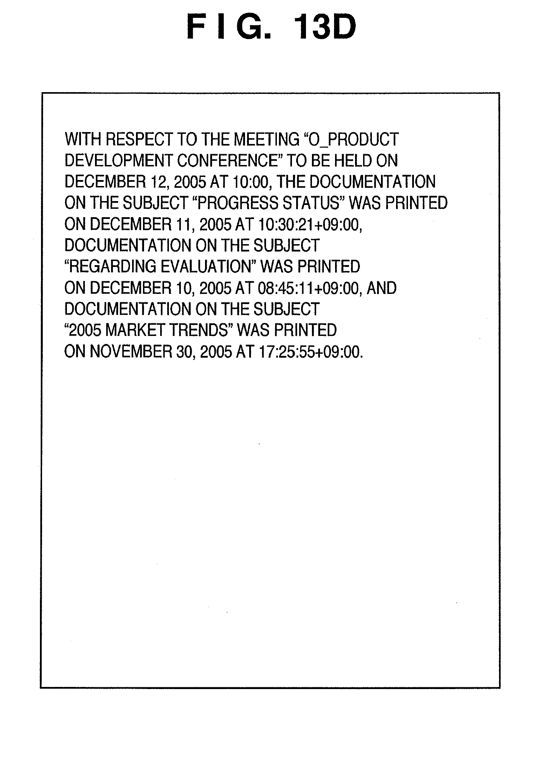

Because in this manner meeting participants can print the documentation on an individual basis, when meeting participants want to print the documentation of the meeting all at once, in some cases the documentation has already been printed. Accordingly, in the arrangement of the present embodiment, if a participant has already printed a portion of the documentation, unnecessary printing is eliminated by printing out only information related to the documentation, such as the time and date of printing, etc. Specific examples will be explained below by referring to Figs. 12 and 13. Fig. 12 is a diagram illustrating an exemplary meeting matrix. Figs. 13A, 13B, 13C, and 13D are schematic views illustrating the way printing is performed if a portion of the meeting documentation has been printed out.

Let us consider a case, wherein User 10428 intends to print the presentation documentation all at once as a single document when the meeting matrix is displayed as in Fig. 12. In such a case, all of the meeting documentation is printed at once as a single document (Fig. 13A) because it has not been printed yet. Here, 1501, 1502, and 1503 show documentation for 00526, 00914, and 01383, respectively. On the other hand, when User 06390 prints documentation, control is configured such that only print information such as the time and date of printing, etc. is output for the portions shown in Fig. 13B, which correspond to the documentation of Presenter 00914 already printed out by User 06390 (1505). In a more detailed example, print control is configured to determine when printing was carried out, as illustrated in Fig. 13C. Because the documentation of the rest of the presenters, 00526 and 01383 (1504 and 1506) has not been printed yet, it is subject to the regular documentation printing procedure.

Consequently, the arrangement of the present embodiment makes it possible to avoid wasting printing paper by printing out only reference information concerning the time when the already printed documentation was printed. Furthermore, Fig. 13C is an example of a situation, in which only a single document has been printed before, with reference information printed out for this printed document. However, if a plurality of documents have been printed before, further resource savings may be achieved by printing, if possible, all of the information together on a single sheet (a plurality of sheets if it does not fit on a single sheet), as shown in Fig. 13D. Moreover, albeit not described in the present embodiment, a technique may be used, in which printing completion information is displayed on the operating panel of the copy machine without printing, or made known via electronic mail, etc. In addition, although such information has not been described in the present embodiment, printing location information may be described along with printing completion information by entering information on which of the copy machines 301-305 performed the printing in the meeting matrix.

It should be noted that in case of documents printed in this manner there are situations, wherein documents are lost and re-printing is required even though information on the time and date of printing has already been communicated. In such situations, as shown by 1304 in Fig. 11, a "Print Again" button for already printed meeting documentation is displayed, making it possible to accept instructions to re-print the documentation. As a result, users can re-print the necessary documents by pressing the "Print Again" button for documents they would like to re-print. It should be noted that, for instance, when the meeting matrix contains entries concerning the frequency of re-printing, an arrangement may be provided, whereby re-printing beyond a certain number of times becomes impossible.

### (Summary of Meeting Presenter-Related Processing)

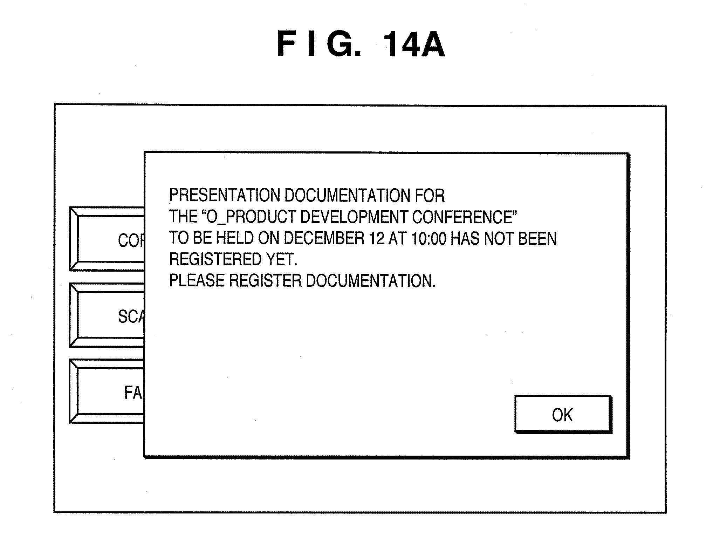

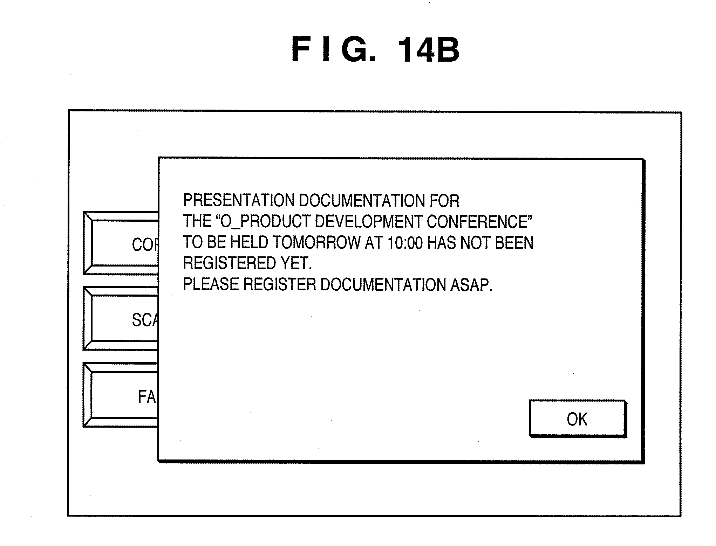

An outline of meeting presenter-related processing carried out in the arrangement of the present embodiment is provided next. When a meeting presenter logs in, the copy machine (e.g. 305), prior to allowing the meeting presenter to use the copy machine 305, displays a message that prompts the user to register presentation documentation if no documentation has been registered yet for a meeting scheduled to be held in the near future (for instance, within one week). Figs. 14A, 14B are diagrams illustrating exemplary displays of messages prompting for the registration of presentation documentation. Here, Fig. 14A is an exemplary message prompting for the registration of presentation documentation. It should be noted that the arrangement of the present embodiment provides a clock as a timer unit used for measuring time in order to manage time and date information.

Furthermore, if no documentation has been registered even though the meeting is scheduled to be held in the nearest future (e.g. within 24 hours), a message may be displayed to strongly encourage users to register, as illustrated in Fig. 14B. By doing so, presenters can be encouraged to register the documentation. The "near future" time settings may be based on a period predetermined in the system or defined in the individual meeting tables for each individual meeting. The settings are defined by a system administrator or a meeting MC who hosts the meeting.

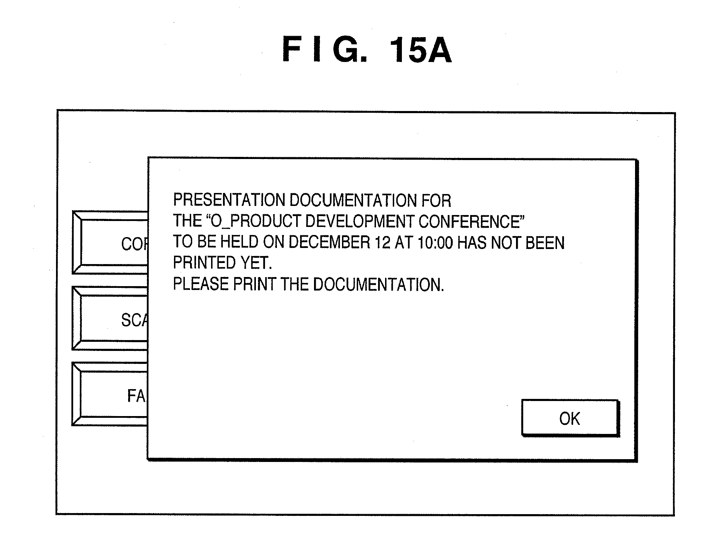

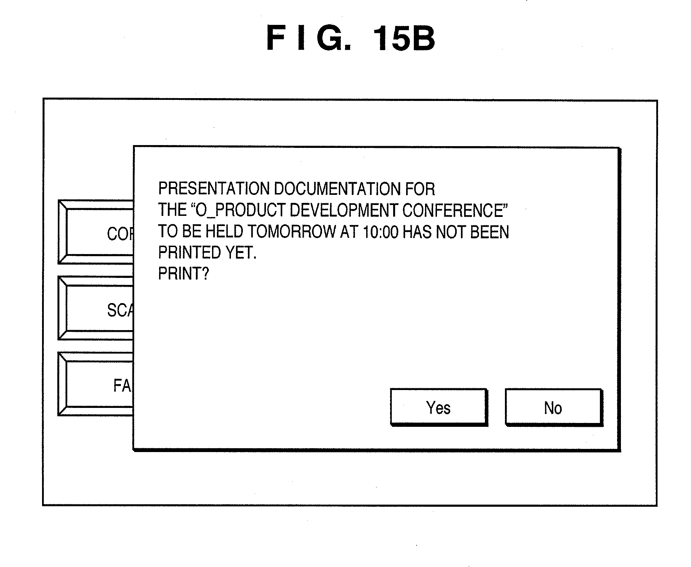

It should be noted that, if no documentation has been printed for a meeting to be held in the near future, a message prompting participants to print presentation documentation may be displayed when meeting participants log in to a copy machine (e.g. 301). Figs. 15A, 15B are diagrams illustrating exemplary displays of messages prompting users to print presentation documentation. If documentation for a meeting to be held in the near future is available, but no documentation has been printed when a meeting participant logs in, a message can be displayed to prompt the participant to print presentation documentation, as shown in Fig. 15A, prior to allowing the participant to use the copy machine 301. Furthermore, if no documentation has been printed despite the fact that the start of the meeting is near, a message may be displayed to the effect that the documentation can be printed immediately if appropriate instructions are given, as shown in Fig. 15B.

### (Basic Processing)

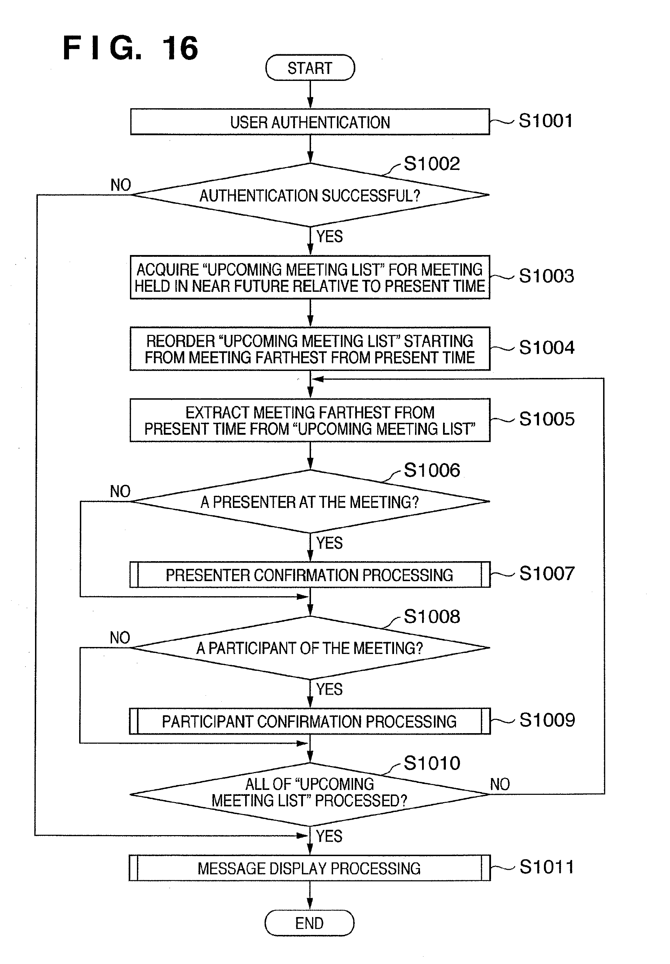

Processing used to implement the operation described above will now be explained with reference to Fig. 16. Fig. 16 is an exemplary flow chart illustrating the flow of basic processing carried out in the arrangement of the present embodiment. It should be noted that while the basic processing below is executed mainly by the copy machines 301-305 (represented by 301 below), the processing is carried out in cooperation with the user authentication server 306 and schedule server 307.

First of all, in Step S1001, user authentication is performed using user information input to the copy machine 301, such as a user ID, password, etc. As described above, user authentication may be carried out by the copy machine 301 alone or may be carried out in cooperation with external devices, such as the user authentication server 306, etc.

Next, in Step S1002, the program confirms whether authentication is successful and proceeds to Step S1003 if it is successful ("YES" in Step S1002). If it is unsuccessful ("NO" in Step S1002), in Step S1011, a message is displayed to the effect that authentication has failed and processing ends.

In Step S1003, an "Upcoming Meeting List" is acquired for meetings to be held in the near future. Here, as described above, the word "near" means that the meeting is to be held within a range defined by a system administrator or by a meeting MC who hosts the meeting, i.e. within a prescribed period from the present moment. In addition, the term "Upcoming Meeting List" refers to a list of meeting IDs for meetings to be held in the near future. It should be noted that although the "Upcoming Meeting List" is acquired by referring to the meeting matrix managed by the schedule server 307, when the meeting matrix is produced and managed in the copy machines 301-305, it is acquired by referring to the meeting matrix managed in the copy machines.

Next, in Step S1004, the meetings in the "Upcoming Meeting List" are reordered starting from the ones to be held during periods farther away from the present time, i.e. later periods. Specifically, the time and date of meetings is acquired from the individual meeting tables 1202 corresponding to the meeting IDs and reordering (sorting) is carried out by comparing them with the present time. It should be noted that the sorting process can be carried out using publicly known technologies, such as quick sorting, etc.

Next, in Step S1005, meeting information on the meeting that is farthest away from the present time, i.e. is held at the latest point in time, among the meetings included in the upcoming meeting list, is extracted from the upcoming meeting list. At such time, information on the meeting, for which the meeting information has been extracted, is eliminated from the upcoming meeting list.

Next, in Step S1006, it is confirmed whether the user ID authenticated in Step S1001 is among the meeting presenters. If the user is among the presenters ("YES" in Step S1006), the program proceeds to Step S1007, and if the user is not among the presenters ("NO" in Step S1006), to Step S1008. In Step S1007, the program carries out presenter confirmation processing, which is described below, and proceeds to Step S1008.

In Step S1008, the program confirms whether the user ID is among the participants of the meeting. If the user is among the participants ("YES" in Step S1008), the program proceeds to Step S1009, and if the user is not among the participants ("NO" in Step S1008), to Step S1010. In Step S1009, the program carries out participant confirmation processing, which is described below, and proceeds to Step S1010.

It should be noted that, as described above, even in case of a "YES" in Step S1006 during the basic processing, in other words, if the user is a meeting presenter, participant confirmation is carried out in Step S1008. This is due to the possibility that the user may be both a meeting participant and a meeting presenter. In such a case, the processing of the cell in the meeting matrix at the intersection of a presenter and a participant with the same ID may be omitted. In other words, printing confirmation for materials presented by the presenter may be omitted. Such processing can be implemented by exercising control in such a manner that information to the effect that no printing confirmation will be carried out with respect to cells with presenters and participants sharing the same ID is attached to documents at the time of registration and documents having such information attached thereto are not subjected to printing confirmation.

In Step S1010, it is determined whether the processing of Steps S1006-S1009 has been carried out for all the meetings contained in the "Upcoming Meeting List". Because meetings subject to processing in Step S1005 are eliminated from the "Upcoming Meeting List", here, in Step S1010, a determination is made as to whether the "Upcoming Meeting List" is empty. If it is determined in Step S1010 that not all of the processing involving meetings close to the present time has been performed ("NO" in Step S1010), the program returns to Step S1005. If it is determined that all of it has been performed ("YES" in Step S1010), the program proceeds to Step S1011 and displays a message. The message displayed is discussed below.

### (Presenter Confirmation Processing)

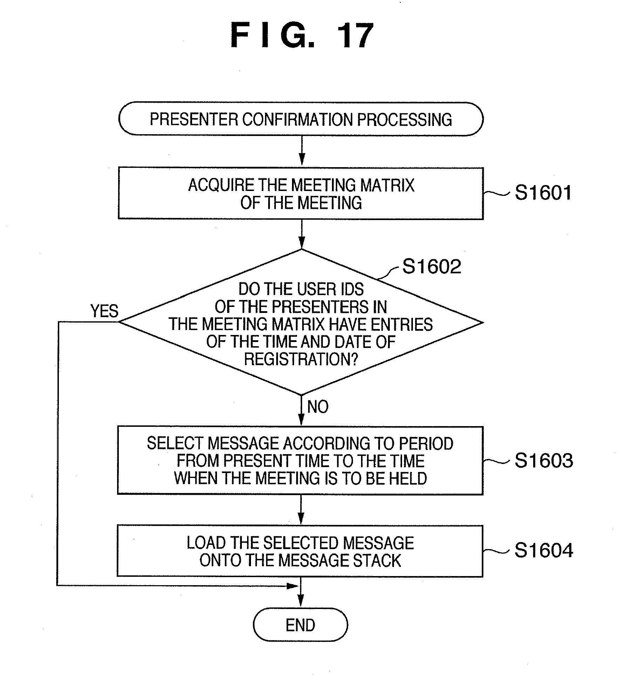

Next, an example of the meeting presenter confirmation processing (presenter confirmation processing) carried out in Step S1007 of Fig. 16 is explained with reference to Fig. 17. Fig. 17 is a flow chart illustrating the flow of presenter confirmation processing. It should be noted that in the explanations below the processing is supposed to be carried out by the copy machine 305.

In Step S1601, the meeting matrix of the meeting is acquired based on the meeting ID. For instance, the system can be adapted to transmit information requesting the meeting matrix comprising the meeting ID to the schedule server 307 in order to acquire the desired meeting matrix as a reply thereof.

Next, in Step S1602, it is determined whether the time and date of registration of documentation has been entered for the user ID used to log in to the copy machine 305 among the user IDs of the presenters in the meeting matrix. Namely, it is determined whether the meeting documentation of the logged-in user has been registered. If it has been registered ("YES" in Step S1602), there are no notifications for the user, and processing completes. If the presenter has not registered the documentation yet ("NO" in Step S1602), the program proceeds to Step S1603.

In Step S1603, a message is acquired that corresponds to the time period from the present time to the time when the meeting is to be held. The selection of the message is carried out by identifying meetings falling within a predetermined time period based on a comparison between the present moment, which is measured by the clock, and the time and date of the meeting. This corresponds to selecting messages displaying, for instance, Fig. 14A or 14B depending on the time period remaining until the meeting. The messages of Fig. 14A, 14B are just examples; they are not limited thereto and not limited to just two messages. The message may be a single fixed message or may be selected from a plurality of two, three or more messages.

Next, in Step S1604, the selected message is loaded onto the message stack and the participant confirmation processing completes.

Here, explanations are provided regarding the message stack. The term "message stack" refers to a stack used for storing messages (a last-in, first-out data structure), which can be provided, for instance, in the RAM 103 or another memory device on a temporary basis. In the present embodiment, processing is carried out successively starting from meetings scheduled for time periods farther away in the future, in other words, meetings to be held at later dates, and, as they are loaded onto the stack, the messages are successively displayed from the front end of the stack. For this reason, they are removed from the stack in the order of information on meetings to be held at closer dates, which is why messages (meetings) highly urgent for the user are displayed first. In case of the message display of Step S1011 in the flow chart of Fig. 16, a message is taken out of the message stack and displayed on the operating panel of the copy machine 305. It should be noted that, as shown in Fig. 15B, control is configured in such a manner that a button used to carry out processing is provided on a screen to enable the user to select print processing if printing operations have to be performed at such time.

### (Participant Confirmation Processing)

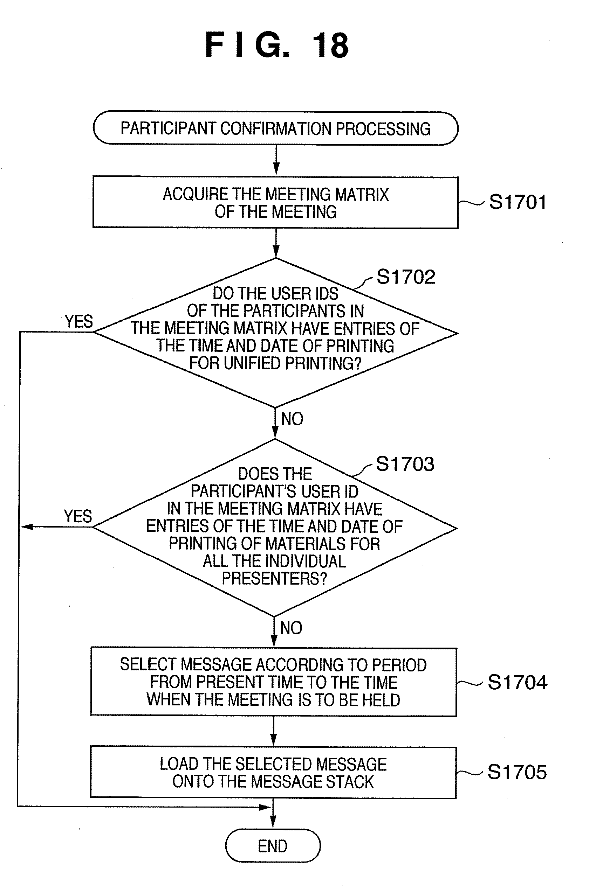

Next, an example of meeting participant confirmation processing (participant confirmation processing) is explained with reference to Fig. 18. Fig. 18 is a flow chart illustrating the flow of participant confirmation processing. It should be noted that in the explanations below the processing is supposed to be performed by the copy machine 301.

First of all, in Step S1701, the meeting matrix of the meeting is acquired from the schedule server 307 based on the meeting ID.

Next, in Step S1702, it is determined whether the time and date of unified printing of documentation has been entered for the user ID used to log in to the copy machine 301 among the user IDs of the participants in the meeting matrix. Namely, it is determined whether the logged-in participant has performed unified printing. If the printing is complete ("YES" in Step S1702), there is nothing to prompt the user to do, and processing ends. If the unified printing has not been performed, in other words, if the documentation of the meeting has not been printed out as a single document ("NO" in Step S1702), the program proceeds to Step S1703.

In Step S1703, by looking at each individual piece of documentation, it is determined whether all of the documentation has been printed. If all of the documentation has been printed ("YES" in Step S1703), there is nothing to prompt the user as a participant to do, and processing ends. If all of the documentation has not been printed out yet ("NO" in Step S1703), the program proceeds to Step S1704.

In Step S1704, a message is acquired that corresponds to the period from the present time and date to the time and date when the meeting is to be held. The selection of the message is carried out by identifying meetings falling within a predetermined time period based on a comparison between the present moment, which is measured by the clock, and the time and date of a meeting. This corresponds to selecting, for instance, Fig. 15A or 15B depending on the time period remaining until the meeting. The messages of Fig. 15A, 15B are just examples; they are not limited thereto and not limited to just two messages. The message may be a single fixed message or may be selected from a plurality of two, three or more messages. Next, in Step S1705, the selected message is loaded onto the message stack and processing ends.

As shown above, the arrangement of the present embodiment makes it possible to prompt the user to print the documentation of a meeting to be held in the near future in advance and to control printing by detecting double printing of the same document, thereby avoiding unnecessary paper use. In other words, the arrangement of the present embodiment provides for appropriate waste-free printing management in accordance with meeting schedules.

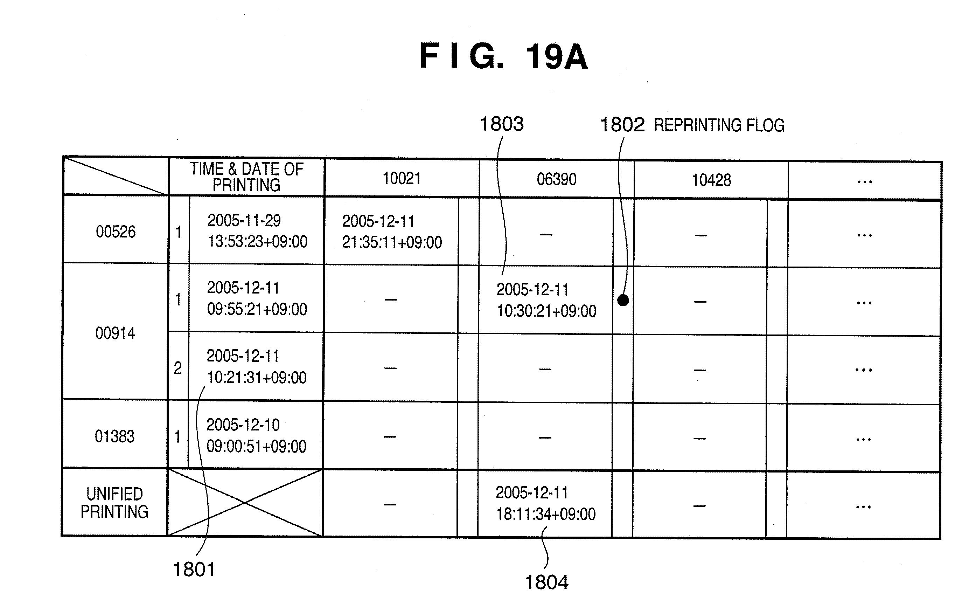

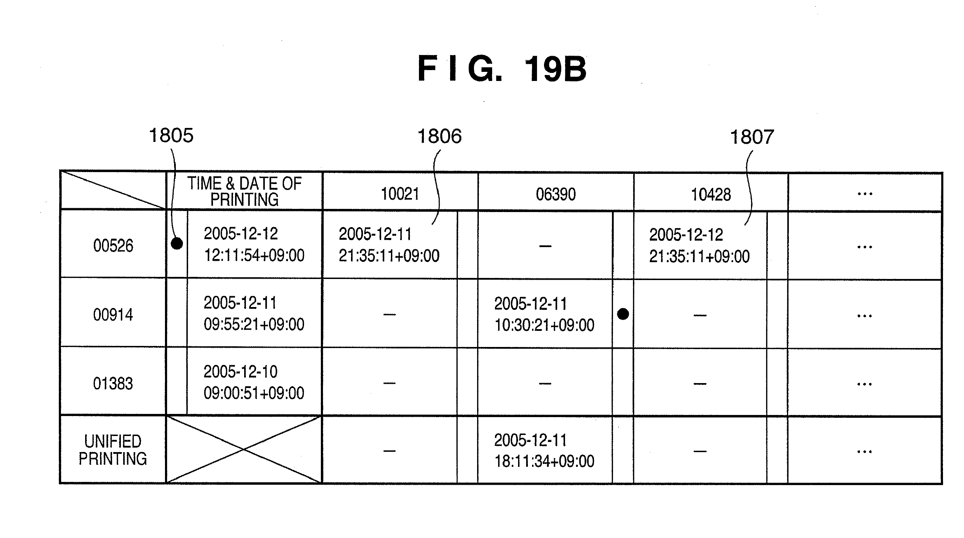

The embodiment is not limited thereto and, for instance, may include situations, in which several pieces of documentation are registered by a single meeting presenter. This can be realized by means of division such that a plurality of information entries concerning completion of printing can be created for the presenter in the meeting matrix. Figs. 19A and 19B are diagrams illustrating a meeting matrix, in which a plurality of materials can be registered by a presenter.

In Fig. 19A, as shown by 1801, two documents are registered by Presenter 00914. In addition, when there is a plurality of presenters, it is possible to put only representative presenters in the meeting matrix. Representative presenters among a given plurality of presenters can be described, for instance, in the presenter table.

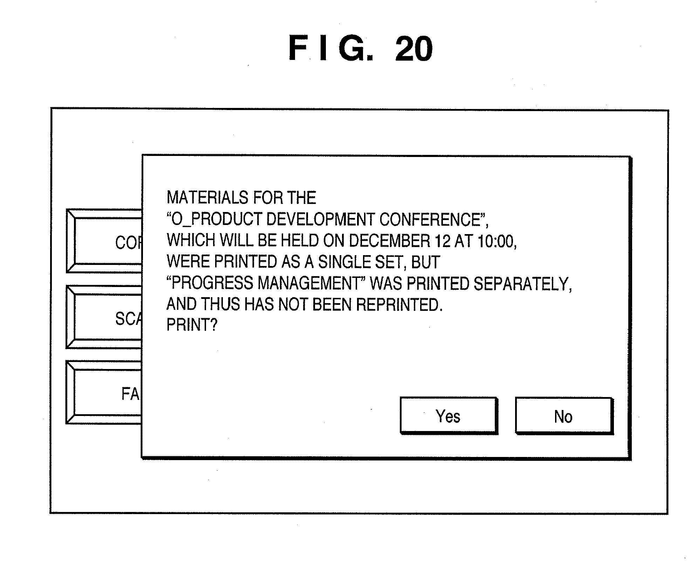

In addition, as shown by 1802 in Fig. 19A, a flag is provided to indicate reprinting of already printed documents. In the example of Fig. 19A, the first piece of documentation of 00914 has already been printed for user ID 06390 (1803). Moreover, all of the meeting materials have already been printed as a single document (1804). At such time, the reprinting flag of the first piece of documentation of 00914 is ●, which shows that the documentation has not been reprinted.
In this case, as shown in Fig. 20, control is configured in such a manner that when the user 06390 logs in to the copy machine 301, a message is displayed asking whether to print the first piece of documentation of 00914 until the time and date of the meeting. Fig. 20 is a diagram illustrating an exemplary display used for confirmation of re-printing. This prevents failure in printing the entire documentation because of reprinting of already printed documents not being performed. It should be noted that this process can be implemented simply based on confirmation of the reprinting flag during log-in. Because the reprinting flag is updated and changed to ○ when reprinting is carried out, a glance at the meeting matrix is sufficient to understand that reprinting has been carried out.

As mentioned previously, examples of events, during which the meeting matrix is updated, include cases in which presenters at a meeting "register documentation", "delete registered documentation", or "update registered documentation". Moreover, these may include cases, in which the participants of a meeting "print registered documentation" or "print all of the documentation as a single document".

When a meeting presenter "registers documentation", the time and date of registration is entered under the time and date of registration corresponding to the presenter. When a meeting presenter "deletes registered documentation", the time and date of registration corresponding to the presenter are deleted and, at the same time, printing entries corresponding to the presenter are deleted for each participant. When a meeting presenter "updates registered documentation", the time and date when the update takes place are entered under the registration time and date corresponding to the presenter and, at the same time, printing entries corresponding to the presenter are deleted for each participant.

When a meeting participant "prints registered documentation", the time and date of printing are entered for said participant under the presenter corresponding to the printed materials. In addition, when a meeting participant "prints all of the documentation as a single document", the time and date of printing are entered in the "unified printing" row for the participant.

In this manner, when documentation is updated, the associated locations in the meeting matrix are modified, and, as a result, when a user logs in, control is configured in such a manner that a message is displayed again to prompt the user to print the documentation because there is no information on completion of printing.

Alternatively, management can be carried out by providing update flags as shown in Fig. 19B. Control is configured such that once a piece of registered documentation is updated, an update flag 1805 is activated. Accordingly, the system may be configured to detect the updating of registered documents and to issue an update notification message when a participant logs in to the copy machine 301. Fig. 19B shows that, as described previously, at the time when documents are updated, the action of "deleting printing entries corresponding to the presenter" has not taken place yet. In other words, print data preceding the time and date of registration remain, as shown by 1806. Thus, because user ID 10428, for instance, is after the time of registration, the updated data has been printed and control is configured such that no update notification message is issued. On the other hand, because the time and date of printing of user ID 10021 is before the time and date of registration, an update-related communication is necessary, and, therefore, processing may be carried out to issue an update notification message.

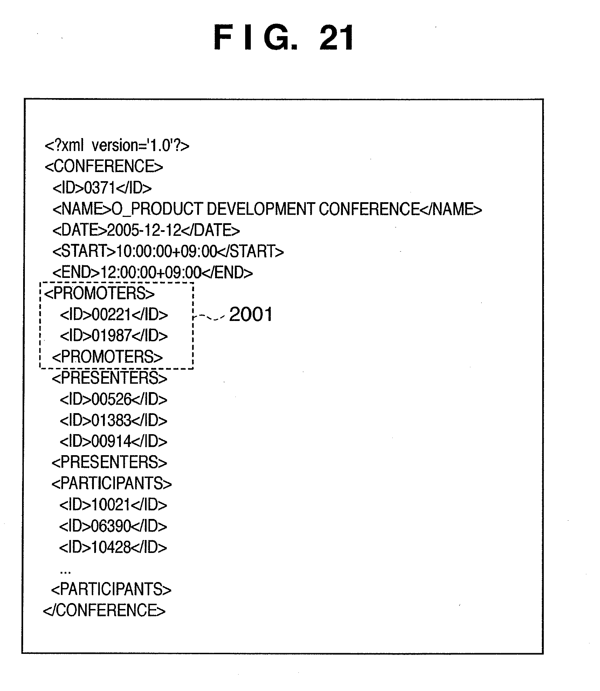

Although the registration of meeting documentation in the present embodiment is carried out by the meeting presenters, it may also be performed by a meeting MC who hosts the meeting. For instance, by adding meeting hosts to individual meeting tables, such meeting hosts can be put in charge of updating, deletion, and registration of documentation for all the presenters. In this case, the task can be addressed by enabling updating for all the presenter items in the meeting matrix. Fig. 21, a diagram produced by expanding Fig. 6, which corresponds to an individual meeting table, provides an example of meeting MC. As shown by 2001, a meeting host item (<PROMOTERS>) is created, in which the user IDs of a plurality of hosts are entered (PROMOTER ID attributes). As a result, it becomes possible to determine whether one is a meeting host when using the schedule server, and, if one is determined to be a meeting host, control can be configured such that the host can register the documentation of other presenters as well.

Moreover, despite the fact that a single printing entry or registration entry is left in the present embodiment, the system can be configured such that a plurality of entries are left. In addition, for the convenience of explanation, the meeting summary table 1201, individual meeting table 1202, presenter table 1203, and participant table 1204 were explained as XML structures. However, they are not limited to XML structures and the same arrangement can be implemented using relational databases, or other methods.

In addition, despite the fact that in the present embodiment print management was carried out for each piece of documentation of the respective presenters, i.e. for each individual electronic file, print management can be carried out in chapter or page units contained in the electronic files as an alternative or in addition.

### <Other Embodiments>

Although an exemplary embodiment of the present invention was described in detail above, the present invention can also comprise embodiments such as, for instance, systems, devices, methods, programs or storage media, etc. Specifically, it may be applied to a system comprising a plurality of devices as well as applied to an apparatus made up of a single device.

It should be noted that in some cases the present invention is realized by supplying a program implementing the functionality of the above-described embodiment to a system or apparatus directly or remotely and allowing the controller of the system or apparatus to read and execute the supplied program code.

Therefore, because the functional processing of the present invention is implemented using a controller or computer, the program code installed on the computer is itself within the technical scope of the present invention. In other words, the present invention comprises computer programs used to implement the functional processing of the present invention.

In such a case, so long as it has the functions of the program, it may take various forms, such as script data supplied to the OS, interpreterexecuted programs, object code, etc.

Storage media used to deliver the program may include, for instance, the following media. Namely, floppy (™) disks, hard disks, optical disks, magnetooptical disks, MOs, CD-ROMs, CD-Rs, CD-RWs, magnetic tape, non-volatile memory cards, ROM, DVDs (DVD-ROMs, DVD-Rs), etc.

In addition, the following embodiments are also contemplated for the delivery of the program. Namely, the browser of a client computer is used to connect to an internet homepage and the computer program of the present invention, or a compressed file possessing automatic installation functionality, is downloaded from the homepage onto a storage media such as HDs, etc. Moreover, it can also be implemented by dividing the program code constituting the program of the present invention into a plurality of files and downloading the respective files from different homepages. In other words, WWW servers that allow a plurality of users to download the program file used to implement the functional processing of the present invention on a computer are also within the scope of the present invention.

In addition, the following embodiments are also contemplated for delivery. Namely, first of all, the program of the present invention is encrypted, stored on a storage medium such as a CD-ROM, etc., and distributed among users. The arrangement of the present invention is implemented by allowing users who satisfy certain criteria to download key information used for decryption from a homepage via the Internet and using this key information to execute the encrypted program and install it on computers. Such forms of delivery are also possible.

Moreover, in addition to implementing the functionality of the above-described embodiment by directing a computer to execute a program it reads, the following implementations are also considered. Namely, an OS etc. running on a computer partially or entirely carries out actual processing based on the instructions of the program and the functionality of the above-described embodiment can be implemented based on this processing.

Furthermore, after writing the program read from the storage media to memory provided in an expansion unit connected to the computer or an expansion board inserted into the computer, the functionality of the above-described embodiment is implemented based on the instructions of the program. Namely, a CPU, etc. provided in an expansion unit or expansion board partially or entirely executes actual processing and the functionality of the above-described embodiment is implemented based on this processing.

The present invention, as described above, can provide a technology allowing for waste-free print management in accordance with meeting schedules.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A print management system for managing printing of document data, comprising:
a schedule storage means (995) configured to store, on a per-event basis, schedule information containing the time and date of an event and identification information for the attendees of the event;
a print status storage means (995) configured to store, on a per-event and per-attendee basis, print status information describing the print status of the document data;
an input means (996) configured to input user identification information; and
a control means (990) configured to, based on the schedule information and the print status information, identify document data to be printed depending on the user, and to control display of a screen prompting the user to print the identified document data on a display means (997).

2. The print management system according to claim 1, further comprising a timer means for measuring time, wherein
the control means identifies the event within a predetermined period based on a comparison between the present moment measured by the timer means and the time and date contained in the schedule information.

3. The print management system according to claim 1 or claim 2, further comprising an acquisition means for acquiring a list of events the user is scheduled to attend based on a comparison between the user identification information and the attendee identification information contained in the schedule information, wherein
the control means carries out the display control and the identification of document data for the events contained in the acquired event list.

4. The print management system according to any one of claims 1 to 3, further comprising an updating means for updating the print status information based on print processing carried out in the print means.

5. The print management system according to any one of claims 1 to 4, further comprising a document storage means for storing the document data, wherein
the control means, furthermore, identifies document data to be printed based on the update of the document data stored in the document storage means.

6. The print management system according to any one of claims 1 to 5, further comprising:
a reception means configured to receive all the document data associated with a designated event for combined printing, and
a print control means configured to, based on the print status information, identify document data that has not been printed by the user among the document data received for the combined printing by the reception means, and to direct the printing means to print the identified document data.

7. The print management system according to claim 6, in which the print control means outputs information indicating that the printing of the document data printed by the user among the document data received for the combined printing by the reception means has been completed.

8. A print management system as claimed in any preceding claim further comprising a document storage means for storing document data.

9. A print management system as claimed in any preceding claim further comprising a registration status storage means configured to store, on a per-event and per-attendee basis, registration status information describing the registration status of the document data; wherein the control means determines, based on the schedule information and the registration status information, whether the user should register the document data, and controls display of a screen prompting to register the document data on a display means (997) if the data is supposed to be registered.

10. A data management device for managing printing of document data using a printing means for forming a print image on a printing medium, **characterized by** comprising:
a schedule storage means (995) configured to store, on a per-event basis, schedule information containing the time and date of an event and identification information for the attendees of the event;
a print status storage means (995) configured to store, on a per-event and per-attendee basis, print status information describing the print status of the document data;
an input means (996) configured to input user identification information;
a control means (990) configured to, based on the schedule information and the print status information, identify document data to be printed depending on the user, and to control display of a screen prompting the user to print the identified document data on a display means (997).

11. A data management device for managing printing of document data using a printing means for forming a print image on a printing medium, **characterized by** comprising:
an acquisition means (990) configured to acquire schedule information containing, on a per-event basis, the time and date of an event and identification information on the attendees of the event, and print status information indicating, on a per-event and per-attendee basis, the print status of the document data,
an input means (996) configured to input user identification information;
a control means (990) configured to identify, based on the schedule information and the print status information, document data to be printed depending on the user and to control display of a screen prompting the user to print the identified document data on a display means (997).

12. A data management method for managing printing of document data using a printing means for forming a print image on a printing medium, **characterized by** comprising:
acquiring schedule information containing, on a per-event basis, the time and date of an event and identification information on the attendees of the event, and print status information indicating, on a per-event and per-attendee basis, the print status of the document data;
inputting user identification information; and based on the schedule information and the print status information, identifying document data to be printed depending on the user and controlling display of a screen prompting the user to print the identified document data on a display means (997).

13. A program which when loaded into a programmable processing apparatus and executed performs a method as claimed in claim 12.

14. A machine-readable storage medium having the program of claim 13 stored thereon.
